# FASCICULE DE BREVET EUROPEEN

(11) **EP 3 026 455 B1**
(45) Date de publication et mention de la délivrance du brevet: **02.01.2019**
(21) Numéro de dépôt: 15195306.4
(22) Date de dépôt: 19.11.2015
(51) Int. Cl.: G01S 7/481, G01S 17/10, G01S 17/58, G01S 17/95

(54) **LIDAR PULSÉ À AMPLIFICATEUR OPTIQUE À SEMI-CONDUCTEUR**
GEPULSTES LIDAR MIT HALBLEITERLASERVERSTÄRKER
PULSED LIDAR WITH SEMICONDUCTOR OPTICAL AMPLIFIER

(30) Priorité: 25.11.2014 FR 1461407
(43) Date de publication de la demande: 01.06.2016
(73) Titulaire: Leosphere, 75008 Paris (FR)
(72) Inventeur: PUREUR, Vincent, 91940 Les Ulis (FR); GUILLOU-CAMARGO, Fabiola, 33400 Talence (FR); GORJU, Guillaume, 91410 DOURDAN (FR)
(74) Mandataire: IPAZ

(56) Documents cités:
- EP-A2- 1 118 876
- WO-A1-2011/036553
- WO-A1-2011/150242
- WO-A2-2009/046717
- US-A1- 2012 171 036

## Description

### Domaine technique

L'invention se situe dans le domaine de l'observation de l'atmosphère par un lidar. Elle s'applique notamment à la détermination à distance de la vitesse du vent, de la concentration de particules dans l'atmosphère, de leur distance, de leurs dimensions et/ou de leur forme, et à la détermination à distance de la température de l'atmosphère. Plus précisément, l'invention concerne un lidar pulsé agencé pour la détermination de ces propriétés de l'atmosphère. L'invention trouve une utilité particulière dans la protection des éoliennes où des lidars relativement fiables et compacts à un coût modéré sont recherchés. Elle peut également être utile pour la prospection et l'optimisation de l'énergie éolienne. L'invention s'applique également au domaine de la météorologie opérationnelle, par exemple pour la sécurisation des décollages et des atterrissages d'aéronefs dans les zones aéroportuaires.

### État de la technique antérieure

Les systèmes lidars, également appelés lidars, sont des dispositifs de détection et de mesure à distance largement utilisés dans la caractérisation des flux d'air dans l'atmosphère. Ils permettent de caractériser des propriétés de l'atmosphère telles qu'une vitesse du vent, une concentration en particules et une température de l'atmosphère. Le principe d'un lidar repose sur les propriétés optiques de propagation d'un faisceau optique entre le lidar et une cible au moins partiellement réfléchissante. Un lidar comprend typiquement une source laser, un capteur, et des moyens de traitement. La source laser émet un faisceau laser de mesure vers la cible, qui réfléchit une partie de ce faisceau laser, appelée faisceau laser de retour, vers le capteur. Le capteur mesure une ou plusieurs caractéristiques du faisceau laser de retour, qui est analysée par les moyens de traitement de manière à en déduire une propriété de la cible. En particulier, la vitesse du vent peut être déterminée en analysant le décalage fréquentiel par effet Doppler du faisceau laser de retour par rapport au faisceau laser de mesure. La concentration en particules dans l'atmosphère peut être déterminée en analysant l'amplitude du faisceau laser de retour, plus le taux de particules dans l'atmosphère étant élevé, plus l'amplitude étant importante.

Afin de sonder une colonne d'atmosphère sur une zone donnée, des mesures doivent être réalisées sur un ensemble d'échantillons de l'atmosphère, appelés volumes de mesure. Chaque volume de mesure est repéré dans un système référentiel du lidar par rapport à une orientation et une distance de mesure. La distance de mesure peut être ajustée de différentes manières, selon le type de lidar. Deux principaux types de lidars sont actuellement utilisés pour la caractérisation de l'atmosphère, les lidars continus et les lidars pulsés. Pour un lidar continu, une focalisation du faisceau laser de mesure par un télescope est nécessaire. La distance moyenne de mesure dépend alors de la distance de mise au point du télescope, et la profondeur de champ est fonction de la focale et de l'ouverture du télescope. Celle-ci augmente avec le carré de la distance, et la fonction de pondération décroît lentement, ce qui favorise des ambiguïtés de mesure sur des échos lointains. Afin d'effectuer des mesures à différentes distances, le réglage du télescope doit être modifié, ce qui implique des mouvements mécaniques relatifs entre des pièces du télescope. Pour un lidar pulsé, la focalisation du faisceau laser de mesure n'est pas indispensable. Le faisceau laser de mesure peut être simplement collimaté. La distance de mesure est alors déterminée à partir de la durée du parcours d'une impulsion entre le lidar et le volume de mesure. Ainsi, contrairement aux lidars continus, les lidars pulsés n'impliquent pas l'utilisation de pièces en mouvement dans le télescope, ont une résolution longitudinale de mesure identique quelle que soit la distance de mesure, et présentent moins facilement de l'ambiguïté. Les lidars pulsés présentent donc une simplicité de mise en oeuvre comparés aux Lidars continus tout en conservant une bonne qualité de mesure.

Par ailleurs, les lidars sont classés selon le type de détection employé. Lorsque la voie de réception du lidar génère un mélange du faisceau laser de retour avec une partie du faisceau laser de mesure, on parle de détection cohérente, ou hétérodyne, et de lidar cohérent. Le lidar peut alors fournir une mesure représentative d'une différence de caractéristique entre le faisceau laser de mesure et le faisceau laser de retour, par exemple une information de décalage de phase ou de décalage en fréquence. Par opposition, un lidar à détection non cohérente, ou lidar non cohérent ou à détection directe, mesure une caractéristique du faisceau laser de retour sans le mélanger avec un faisceau laser de référence.

La source laser est l'un des composants les plus onéreux et les plus consommateurs d'énergie électrique dans un lidar. Le type de technologie utilisée et sa mise en oeuvre sont donc particulièrement importants dans la recherche d'un lidar performant à faible coût. Les lidars pulsés font généralement appel à une source laser formée par un oscillateur maître et un amplificateur de puissance, cet ensemble étant connu sous l'acronyme MOPA pour "Master Oscillator Power Amplifier" en anglais. Plus précisément, un système MOPA comprend un laser maître faisant office d'oscillateur maître et un amplificateur optique permettant d'amplifier la puissance du faisceau laser maître.

Le laser maître peut être un laser à fibre ou un laser à semi-conducteur. Il délivre généralement un faisceau laser présentant une longueur d'onde de 1,5 µm ou 2 µm. Plus généralement, le laser maître peut émettre dans le proche infrarouge, par exemple dans la bande [0,8 ; 2,1 µm]. Ce signal est tout d'abord modulé dans le temps afin de créer les impulsions optiques. Les modulateurs utilisés sont en général de type Modulateur Acousto Optique (MAO) ou interféromètre Mach Zehnder et présentent typiquement des taux d'extinction optique entre les impulsions de 30 à 45 dB, le signal résiduel pouvant ensuite être amplifié entre les impulsions. De plus, les MAOs ont des temps de réponse de l'ordre de quelques dizaines de nanosecondes. Ceci impose une limite inférieure à la durée temporelle des impulsions optiques et impacte directement la résolution spatiale du lidar et sa zone aveugle.

Pour la mesure de la vitesse du vent, les lidars pulsés utilisent souvent des amplificateurs optiques à fibre. En général, il s'agit d'un amplificateur à fibre dopée à l'erbium, à l'ytterbium, à l'holmium ou au thulium, selon la longueur d'onde du faisceau laser maître. Les amplificateurs à fibre présentent l'inconvénient de délivrer une puissance moyenne de sortie limitée par le pompage optique. La puissance moyenne peut être conservée en régime impulsionnel pour des cadences comprises entre 10 et 100 kHz. Les amplificateurs à fibre présentent une efficacité énergétique relativement faible, de l'ordre de 5%. Leurs coûts de fabrication et d'intégration en masse sont relativement élevés et peuvent difficilement être baissés avec la quantité, compte tenu de leur complexité.

On connait dans l'état de la technique le document WO2011/036553 décrivant une méthode et un système pour déterminer des caractéristiques du vent dans un volume déterminé, à partir de mesures effectuées par un ensemble de lidars couvrant chacun un échantillon du volume. Il y est décrit un anémomètre laser basé sur l'utilisation de sources lasers non-cohérentes modulables en fréquence, d'un amplificateur optique à fibre et d'un circuit de corrélation des faisceaux émis par lesdites sources et des faisceaux rétrodiffusés détectés.

On connait également le document EP1118876 divulguant un lidar cohérent générant un faisceau laser à partir d'un laser pulsé. Le lidar comprend un laser pulsé, un diviseur optique séparant le faisceau laser en une voie de mesure et une voie de référence, un coupleur optique, et des moyens de détection. La voie de référence comprend notamment une ligne à retard susceptible de comporter un amplificateur optique.

On connait également le document WO2011/150242 décrivant une méthode et un lidar ayant pour objectif de mesurer simultanément des distances et des vitesses à de courtes et longues portées. Il y est décrit une source de rayonnement comprenant notamment un laser, un séparateur, un générateur d'impulsions et, de manière optionnelle, un amplificateur optique à fibre.

L'état de la technique comprend également le document US2012/171036 divulguant un système de contrôle de l'angle d'attaque d'une pale par l'intermédiaire d'un lidar. Le lidar, situé au niveau d'un bord d'attaque d'une pale, comprend un ou plusieurs faisceaux lasers pulsés, un détecteur recevant de la lumière pulsée rétrodiffusée par un fluide. La vitesse du fluide est déterminée par crénelage temporel de la lumière pulsée rétrodiffusée.

Enfin, on connait le document WO2009/046717 décrivant l'utilisation d'un lidar cohérent comprenant un laser à semi-conducteurs, un amplificateur optique et un détecteur. La vitesse du fluide est déterminée par détection cohérente en mélangeant le faisceau laser de retour avec une partie du signal de référence.

### Exposé de l'invention

Un but de l'invention est notamment de remédier à tout ou partie des inconvénients précités. En particulier, un premier but de l'invention est de réduire les coûts de développement et de fabrication d'un lidar pulsé pour des applications de protection d'éoliennes et/ou de sécurité des zones aéroportuaires, ou pour des applications de mesure de vent à courte et moyenne distances. Un autre but de l'invention est de diminuer la consommation électrique du lidar pulsé et d'améliorer la compacité et l'intégration de l'amplificateur optique dans le lidar pour faciliter sa conception. L'invention a aussi pour but d'améliorer la fiabilité de l'amplificateur optique, et donc celle du lidar pulsé. Encore un autre but est de permettre une meilleure extinction optique entre les impulsions et une plus forte cadence de tir.

Plus précisément, l'invention a pour objet un lidar pulsé comprenant :
▪ un laser maître apte à générer un faisceau laser maître, ▪ un générateur d'impulsions agencé pour générer le signal de pompage,
▪ un amplificateur optique agencé pour amplifier le faisceau laser maître en fonction du signal de pompage, le faisceau laser amplifié formant un faisceau laser de mesure apte à éclairer un volume de mesure,
▪ un capteur agencé pour recevoir le faisceau laser de mesure rétrodiffusé par le volume de mesure, appelé faisceau laser de retour, et générer un signal de mesure comprenant une information représentative d'une caractéristique du faisceau laser de retour, et
▪ une unité de traitement agencée pour déterminer la caractéristique du faisceau laser de retour,
le lidar pulsé étant caractérisé en ce que le laser maître est continu ou quasi-continu, l'amplificateur optique est un amplificateur optique à semi-conducteur, et en ce que le signal de pompage est déterminé de sorte que l'amplificateur optique à semi-conducteur génère un faisceau laser de mesure impulsionnel.

Le lidar pulsé selon l'invention a ainsi pour principale caractéristique de coupler la fonction de modulation d'intensité du faisceau laser maître, et la fonction d'amplification de ce faisceau laser dans un même composant, à savoir l'amplificateur optique à semi-conducteur.

Selon une première variante de réalisation, l'amplificateur optique à semi-conducteur est un amplificateur optique à semi-conducteur à section rectangulaire, ou "ridge semiconductor optical amplifier" en anglais. Selon une deuxième variante de réalisation, l'amplificateur optique à semi-conducteur est un amplificateur optique à semi-conducteur fuselé. Ce type d'amplificateur optique est également qualifié d'évasé, ou en forme d'entonnoir. Il est mieux connu sous la dénomination anglo-saxonne "tapered semiconductor optical amplifier". Il est à noter que le taux d'extinction optique d'un amplificateur à semi-conducteur peut atteindre les 70 dB, ce qui réduit grandement l'amplification de signal résiduel entre les impulsions. De plus, les temps de montée/descente d'un amplificateur à semi-conducteur sont inférieurs à la nanoseconde, ce qui implique une amélioration de la résolution spatiale de l'instrument, et une réduction de sa zone aveugle.

Le laser maître peut être un laser à semi-conducteur ou un laser à fibre. Dans le cas où le laser maître est un laser à semi-conducteur, il peut être formé avec l'amplificateur optique à semi-conducteur sur un même substrat semi-conducteur. Le couple formé par le laser maître et l'amplificateur optique présente ainsi un encombrement et un coût réduits.

Le laser maître peut être un laser continu, ou "continuous wave (CW)" laser en anglais, ou quasi continu. Dans le cas d'un laser quasi continu, le lidar est alors agencé pour que les intervalles de temps où l'amplificateur optique est pompé soient contenus dans les intervalles de temps où le laser maître émet le faisceau laser maître.

Selon une forme particulière de réalisation, le lidar comprend, en outre, des moyens pour commander indépendamment le laser maître et l'amplificateur optique à semi-conducteur. Par commandes indépendantes, on entend des instructions différenciées pour le laser maître et pour l'amplificateur optique. En particulier, les périodes où le laser maître émet le faisceau laser peuvent différer de celles où le faisceau laser est amplifié. À titre d'exemple, le laser maître peut être piloté par un signal continu alors que l'amplificateur optique est piloté par un signal modulé dans le temps.

Selon une première forme de réalisation, le générateur d'impulsions est agencé pour générer un courant électrique de pompage. Ce courant électrique peut être appliqué à un composant en matériau semi-conducteur de l'amplificateur optique.

Selon une deuxième forme de réalisation, le générateur d'impulsions est agencé pour générer un signal optique de pompage. Ce signal optique est par exemple un faisceau laser de pompage. La longueur d'onde du faisceau laser de pompage, ou sa fréquence, est déterminée en fonction des propriétés optoélectroniques de l'amplificateur optique à semi-conducteur. La longueur d'onde du faisceau laser de pompage correspond à la fréquence d'absorption de l'amplificateur optique à semi-conducteur.

Le signal de pompage peut être déterminé de sorte à obtenir toute forme temporelle souhaitée du faisceau laser de mesure. Le générateur d'impulsions peut par exemple être agencé de sorte que l'amplificateur optique à semi-conducteur génère un faisceau laser de mesure de forme temporelle carrée, triangulaire, ou gaussienne. La fréquence et la forme des impulsions peuvent être variables dans le temps, car elles ne dépendent que de la commande du générateur d'impulsions. Il est à noter qu'un amplificateur optique à semi-conducteur présente un temps de réponse relativement faible, par exemple de l'ordre d'une nanoseconde, à comparer à la durée des impulsions, par exemple de l'ordre d'une centaine de nanosecondes. En conséquence, la forme temporelle du faisceau laser de mesure peut être sensiblement identique à celle du signal de pompage, au facteur d'amplification près. Autrement dit, l'amplitude du faisceau laser de mesure peut suivre dans le temps l'amplitude du signal de pompage, au facteur d'amplification près et à un éventuel retard près. Un autre avantage de l'utilisation d'un amplificateur optique à semi-conducteur est qu'il est possible d'appliquer un décalage de fréquence optique dans l'impulsion par rapport au faisceau de référence. Ce décalage fréquentiel peut par exemple provenir directement d'une commande en courant appliquée à l'amplificateur à semi-conducteur.

Selon une forme particulière de réalisation, le lidar comprend, en outre, des moyens pour générer un faisceau laser de référence corrélé au faisceau laser maître, et pour diriger le faisceau laser de référence vers le capteur. Le faisceau laser de référence peut notamment être corrélé en fréquence au faisceau laser maître. Le lidar est alors appelé "lidar cohérent". Le signal de mesure généré par le capteur comprend alors une information représentative d'une différence de caractéristique entre le faisceau laser de référence et le faisceau laser de retour. À titre d'exemple, cette information peut résulter de l'effet Doppler. Le signal de mesure comporte alors une information représentative d'une différence de fréquence entre le faisceau laser de retour, et le faisceau laser de référence. Cette différence de fréquence est représentative de la vitesse radiale des particules.

Selon une première variante de réalisation, les moyens pour générer le faisceau laser de référence comprennent un séparateur de faisceau disposé sur le chemin optique entre le laser maître et l'amplificateur optique à semi-conducteur, de sorte que le faisceau laser de référence est formé par une partie du rayonnement du faisceau laser maître. Plus généralement, le séparateur de faisceau peut être disposé en tout point d'une voie de mesure du lidar, c'est-à-dire en aval du laser maître.

Selon une deuxième variante de réalisation, le laser maître comprend un milieu à gain agencé de sorte que le faisceau laser maître est prélevé par une première face du milieu à gain, et le faisceau laser de référence est prélevé par une deuxième face du milieu à gain. La deuxième face du milieu à gain peut notamment être revêtue d'un revêtement partiellement réfléchissant, laissant passer une partie du rayonnement laser généré dans le milieu à gain.

Selon une troisième variante de réalisation, le lidar comprend une deuxième source laser, en plus du laser maître. La deuxième source laser peut générer un faisceau laser de référence à une fréquence sensiblement identique à celle du faisceau laser maître pour que les deux faisceaux soient cohérents. La fréquence (longueur d'onde) du faisceau laser maître et celle du faisceau laser de référence sont de préférence constantes.

Selon une forme particulière de réalisation, le lidar comprend des moyens pour limiter les réflexions parasites du faisceau laser vers le laser maître. Le lidar peut notamment comporter un préamplificateur à semi-conducteur piloté par un signal de commande de manière à prendre soit un état dit passant, dans lequel il amplifie ou laisse passer le faisceau laser maître sans amplification dans une certaine plage de longueurs d'onde, soit un état dit bloquant, dans lequel il atténue l'amplitude du faisceau laser qui le traverse. Le signal de commande pilotant le préamplificateur peut être le signal de pompage délivré par le générateur d'impulsions, ou un autre signal. Le préamplificateur à semi-conducteur est par exemple à section rectangulaire. Il est de préférence formé sur le même substrat que le laser maître et/ou l'amplificateur optique.

Plus particulièrement, le préamplificateur optique à semi-conducteur peut être placé entre le laser maître et l'amplificateur optique à semi-conducteur. Il peut recevoir, comme l'amplificateur optique, le signal de pompage, de manière à amplifier le faisceau laser maître en fonction de ce signal de pompage. Les phases d'amplification par le préamplificateur et l'amplificateur optiques sont ainsi parfaitement synchronisées.

Les réflexions parasites vers le laser maître peuvent également être limitées en prévoyant des surfaces optiques non strictement parallèles entre les différents composants. Certaines surfaces présentent par exemple un angle compris entre 0,5 degré et 3 degrés. Le non-parallélisme peut notamment être réalisé par une coupe du substrat semi-conducteur au niveau de la face de sortie de l'amplificateur optique. Ces réflexions peuvent aussi être limitées en utilisant un amplificateur optique à semi-conducteur dont l'axe optique forme un angle non nul avec l'axe optique du laser maître.

Le générateur d'impulsions peut être agencé pour modifier une propriété du signal de pompage afin de modifier la fréquence du faisceau laser de mesure généré par l'amplificateur optique à semi-conducteur, et/ou la fréquence du faisceau laser maître préamplifié par le préamplificateur optique. Un décalage en fréquence peut ainsi être obtenu entre le faisceau laser de mesure et le faisceau laser de référence. Lorsque le générateur d'impulsions délivre un courant électrique, il est possible de modifier une intensité de ce courant électrique pour modifier la fréquence du faisceau laser traversant le préamplificateur optique ou l'amplificateur optique à semi-conducteur.

L'invention a également pour objet une éolienne comprenant des pales, des moyens pour orienter les pales, et un lidar cohérent pulsé tel que décrit précédemment. Selon l'invention, les moyens pour orienter les pales sont agencés pour orienter les pales en fonction de la caractéristique du faisceau laser de retour déterminée par l'unité de traitement. En particulier, l'orientation des pales peut être déterminée en fonction d'une vitesse et d'une direction du vent.

L'invention a également pour objet un bateau à voile comprenant des moyens pour régler une surface de voile, et un lidar cohérent pulsé tel que décrit précédemment. Selon l'invention, les moyens pour régler la surface de voile sont agencés pour régler la surface de voile en fonction de la caractéristique du faisceau laser de retour déterminée par l'unité de traitement.

### Description des figures

D'autres avantages et particularités de l'invention apparaîtront à la lecture de la description détaillée de mises en oeuvre et de modes de réalisation nullement limitatifs, au regard de dessins annexés sur lesquels :
- la figure 1 représente un premier exemple de réalisation d'un lidar cohérent pulsé selon l'invention ;
- les figures 2A, 2B, 2C représentent, sous forme de graphiques, des exemples de spectres en fréquence d'un signal de mesure correspondant à différentes distances de mesure ;
- la figure 3 représente, sous forme d'un graphique, un exemple de résultats de vitesses radiales du vent obtenus par un lidar cohérent pulsé selon l'invention ;
- la figure 4 représente un deuxième exemple de réalisation d'un lidar cohérent pulsé selon l'invention, comprenant un élément de décalage en fréquence piloté en continu;
- la figure 5 représente un troisième exemple de réalisation d'un lidar cohérent pulsé selon l'invention, dans lequel un laser maître comprend un milieu à gain dont une première face délivre un faisceau laser maître, et une deuxième face délivre un faisceau laser de référence ;
- la figure 6 représente un quatrième exemple de réalisation d'un lidar cohérent pulsé selon l'invention, dans lequel le capteur optique est disposé de manière à recevoir à la fois le faisceau laser de référence et le faisceau laser de retour via une deuxième face du milieu à gain du laser maître ;
- la figure 7 représente un cinquième exemple de réalisation d'un lidar cohérent pulsé selon l'invention, comprenant une pluralité d'amplificateurs optiques à semi-conducteur ;
- la figure 8 représente un sixième exemple de réalisation d'un lidar cohérent pulsé selon l'invention, comprenant une pluralité de lasers maîtres ;
- la figure 9 illustre l'application d'un décalage fréquentiel entre un faisceau laser de mesure et le faisceau laser de référence par la commande d'un courant électrique appliqué à un amplificateur optique à semi-conducteur ;
- la figure 10 représente une partie d'un exemple de lidar pulsé selon l'invention comprenant un préamplificateur placé entre un laser maître et un amplificateur optique.

### Description de modes de réalisation

Les modes de réalisation décrits ci-après étant nullement limitatifs, on pourra notamment considérer des variantes de l'invention ne comprenant qu'une sélection de caractéristiques décrites, par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

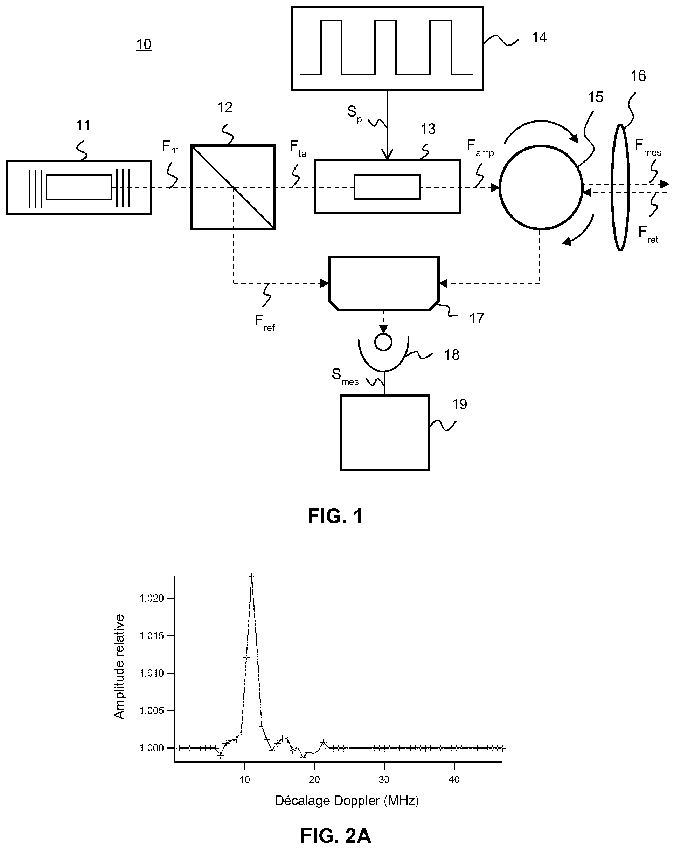

La figure 1 représente un premier exemple de réalisation d'un lidar cohérent pulsé selon l'invention. Le lidar 10 comprend un laser maître 11, un séparateur de faisceau 12, un amplificateur optique à semi-conducteur 13, un générateur d'impulsions électriques ou optiques 14, un circulateur 15, un télescope 16, un combineur de faisceaux 17, un capteur optique 18, et une unité de traitement 19. Le laser maître 11 est un laser continu. Il génère un faisceau laser maître Fₘ en direction du séparateur de faisceau 12. Le faisceau laser Fₘ est par exemple émis dans la bande de fréquences infrarouge, par exemple à la fréquence centrale de 1550 nanomètres (nm), soit une fréquence d'environ 193,5 THz. Dans cette bande de fréquences, le rayonnement laser est relativement peu absorbé par l'atmosphère, et les lasers sont produits avec des composants à relativement faible coût. Le faisceau laser maître Fₘ est dit mono-fréquence. Il présente par exemple une largeur de raie laser inférieure ou égale à 5 MHz, et une puissance moyenne de l'ordre de quelques dizaines de milliwatts. Le laser maître 11 peut être un laser à semi-conducteur ou un laser à fibre. Le laser à semi-conducteur est par exemple une diode laser. Plus précisément, il peut comporter une diode laser à cavité verticale émettant par la surface ou "vertical cavity surface-emitting laser" (VCSEL) en anglais, ou un laser à cavité externe émettant par la surface ou "vertical external cavity surface-emitting laser" (VECSEL) en anglais. Cette diode laser peut être pompée de manière optique ou électrique. Le laser à semi-conducteur peut également être un laser à rétroaction répartie ou "Distributed Feedback Laser" (DFB) en anglais, un réflecteur de Bragg distribué ou "Distributed Bragg Reflector" (DBR) en anglais, ou un laser à diode à cavité étendue ou "Extended Cavity Diode Laser" en anglais.

Le séparateur de faisceau 12 permet de former une voie de mesure et une voie de référence. Il sépare le faisceau laser maître Fₘ en un faisceau laser de référence F_{ref}, et un faisceau laser à amplifier Fₜₐ. Le séparateur de faisceau 12 est ici représenté comme étant un cube séparateur. Il peut néanmoins s'agir de tout élément optique apte à diviser un faisceau laser en deux faisceaux lasers distincts. Le faisceau laser de référence F_{ref} est dirigé vers le combineur de faisceaux 17, et le faisceau laser à amplifier Fₜₐ est dirigé vers l'amplificateur optique à semi-conducteur 13.

L'amplificateur optique à semi-conducteur 13 amplifie la puissance du faisceau laser à amplifier Fₜₐ en conservant ses propriétés spectrales, en particulier sa polarisation, sa longueur d'onde et sa forme transverse. On appelle faisceau laser amplifié Fₐₘₚ le faisceau laser en sortie de l'amplificateur optique 13. Le gain de l'amplificateur optique 13 peut être compris entre 10 dB et 30 dB. L'amplificateur optique 13 présente par exemple une largeur de bande d'amplification de 85 nm centrée autour de la longueur d'onde du faisceau laser maître Fₘ, soit 1550 nm. L'amplificateur optique 13 forme avec le laser maître 11 un amplificateur de puissance à oscillateur maître, ou "Master Oscillator Power Amplifier" (MOPA) en anglais, le laser maître 11 correspondant à un oscillateur local ou oscillateur maître. Selon une particularité de l'invention, l'amplificateur optique 13 est pompé par un signal de pompage impulsionnel Sₚ délivré par le générateur d'impulsions 14, de sorte que le faisceau laser amplifié Fₐₘₚ en sortie de l'amplificateur optique 13 se présente également sous forme d'un signal impulsionnel. Le signal de pompage Sₚ est par exemple un signal carré. Le faisceau laser amplifié présente alors un état bas, pour lequel la puissance optique est sensiblement nulle, et un état haut, pour lequel la puissance optique est non nulle. Pour l'état haut, elle est par exemple sensiblement égale à 1 Watt. La durée temporelle de chaque impulsion, autrement dit la durée à l'état haut pour un signal carré, est par exemple comprise entre environ 100 ns et 400 ns. Cette durée peut être ajustée en fonction de la résolution souhaitée. Par rapport à un amplificateur optique à fibre où le temps de vie des porteurs de charge est de l'ordre de quelques microsecondes, un amplificateur optique à semi-conducteur présente l'avantage de pouvoir délivrer des impulsions avec une plus grande fréquence de répétition, le temps de vie des porteurs étant de l'ordre de la nanoseconde. La fréquence de répétition des impulsions peut par exemple être de l'ordre de plusieurs mégahertz. La détermination d'une caractéristique de l'atmosphère à une distance donnée peut alors résulter d'une pluralité d'impulsions optiques, la fréquence de répétition des impulsions relativement élevée compensant leur faible énergie.

Selon une première variante de réalisation, le signal de pompage Sₚ est un courant électrique, appelé courant d'injection, appliqué au composant en matériau semi-conducteur de l'amplificateur optique 13. Le générateur d'impulsions 14 est alors un générateur de courant. Selon une deuxième variante de réalisation, le signal de pompage Sₚ est un signal optique, par exemple un faisceau laser. Le générateur d'impulsions 14 est alors un laser délivrant un faisceau laser à une longueur d'onde apte à pomper l'amplificateur optique 13. L'amplificateur optique 13 peut être un amplificateur optique à semi-conducteur en forme d'entonnoir ou à section rectangulaire. Ces types d'amplificateurs optiques sont mieux connus sous leurs appellations anglo-saxonnes "tapered semiconductor optical amplifier" et "ridge semiconductor optical amplifier". L'amplificateur optique à semi-conducteur 13 a pour avantage de présenter un temps de réponse très court, de l'ordre de quelques nanosecondes. Le temps de réponse pour passer d'un état actif, où le faisceau laser maître Fₘ est amplifié, à un état passif, où le faisceau Fₘ est absorbé, peut être inférieur ou égal à 4 ns. De même, le temps de réponse pour le passage de l'état passif à l'état actif peut être inférieur ou égal à 4 ns. L'amplificateur optique 13 est alors de préférence pompé/alimenté par un générateur d'impulsions présentant un temps de réponse analogue ou inférieur, afin d'obtenir un faisceau laser amplifié Fₐₘₚ de forme optimale.

Le faisceau laser amplifié Fₐₘₚ est dirigé vers une première entrée-sortie du circulateur 15 et ressort sur une deuxième entrée-sortie pour se diriger vers le télescope 16 afin d'être focalisé ou collimaté. Le circulateur peut être remplacé par un séparateur de faisceau par polarisation, ou "polarization beamsplitter" (PBS) en anglais. Le télescope 16 consiste par exemple en une lentille de focalisation ou en un groupe de lentilles. Le faisceau laser issu du télescope 16 est appelé faisceau laser de mesure Fₘₑₛ. Il est par exemple focalisé à une distance de l'ordre de quelques centaines de mètres.

Le faisceau laser de mesure Fₘₑₛ, lorsqu'il atteint une cible telle qu'une particule, est en partie réfléchi vers le lidar. Cette partie réfléchie, appelée faisceau laser de retour Fᵣₑₜ, repasse par le télescope 16, entre dans le circulateur 15 par la deuxième entrée-sortie et ressort par une troisième entrée-sortie pour être dirigé vers le combineur de faisceaux 17. Dans cet exemple de réalisation, où le faisceau laser de retour Fᵣₑₜ passe par le même télescope que le faisceau laser de mesure Fₘₑₛ, on parle de système monostatique. Alternativement, le faisceau laser de retour Fᵣₑₜ pourrait être capté par un télescope différent du télescope utilisé par le faisceau laser de mesure. On parle alors de système bistatique.

Le combineur de faisceaux 17 a pour fonction de mélanger le faisceau laser de retour Fᵣₑₜ avec le faisceau laser de référence F_{ref}, de manière à réaliser une mesure cohérente par interférométrie. De manière bien connue pour l'homme du métier, la différence de fréquence entre le faisceau laser de référence F_{ref}, et le faisceau laser de retour Fᵣₑₜ, appelée décalage Doppler, permet de déterminer la vitesse radiale de la cible selon l'axe du faisceau laser de mesure Fₘₑₛ. Il est à noter dans cet exemple de réalisation que la disposition du séparateur de faisceau 12 en amont de l'amplificateur optique 13 a pour effet de générer un faisceau laser de référence continu ou quasi continu, ce qui facilite la comparaison avec le faisceau laser de retour Fᵣₑₜ.

Le faisceau laser de retour Fᵣₑₜ et le faisceau laser de référence F_{ref} sont reçus par le capteur optique 18, qui transforme le signal optique résultant en un signal électrique représentatif de la somme des faisceaux lasers de retour Fᵣₑₜ et de référence F_{ref}. Ce signal électrique est appelé signal de mesure Sₘₑₛ. Le capteur optique 18 est par exemple une photodiode.

L'unité de traitement 19 est agencée pour recevoir le signal de mesure Sₘₑₛ, et pour en extraire une caractéristique de l'atmosphère. En particulier, l'unité de traitement 19 peut déterminer le décalage Doppler subi par le faisceau laser de mesure Fₘₑₛ, et en déduire la vitesse radiale des particules dans l'atmosphère. Il est à noter qu'une même impulsion du faisceau laser de mesure Fₘₑₛ peut être réfléchie sur différentes particules se trouvant à des distances différentes du lidar 10. Ainsi et selon une forme particulière de réalisation, le signal de mesure Sₘₑₛ est échantillonné, transformé dans le domaine de fréquence de Fourier puis discrétisé en plusieurs cases distance. À titre d'exemple, la fréquence d'échantillonnage peut être égale à 250 MHz. Cette fréquence d'échantillonnage permet d'obtenir environ une cinquantaine de points pour chaque case distance. Pour une durée d'impulsion de 200 nanosecondes, la résolution spatiale d'une case distance est de 30 mètres environ. À partir du spectre fréquentiel, la vitesse radiale des particules peut donc être déterminée pour une case distance donnée et pour une impulsion donnée du faisceau laser de mesure Fₘₑₛ. L'unité de traitement 19 peut être agencée pour déterminer une caractéristique moyenne de l'atmosphère à une ou plusieurs distances données simultanément, à partir de plusieurs impulsions du faisceau laser de mesure Fₘₑₛ.

Selon une forme particulière de réalisation, des paramètres du lidar 10 sont ajustés en fonction d'une caractéristique de l'atmosphère déterminée par l'unité de traitement 19. En particulier, le laser maître et l'amplificateur peuvent être ajustés en fonction de l'énergie par impulsion du faisceau laser de retour Fᵣₑₜ. Ces ajustements peuvent concerner la fréquence, la puissance et/ou la forme du signal de pompage Sₚ, de manière à modifier le taux de répétition des impulsions, leur énergie ou leur durée.

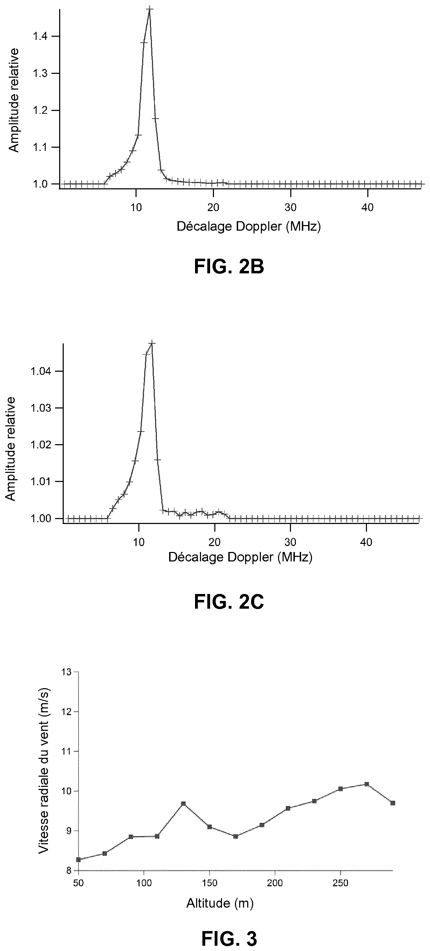

Les figures 2A, 2B et 2C représentent, sous forme de graphiques, des exemples de spectres en fréquence déterminés pour des impulsions du faisceau laser de retour correspondant à différentes distances de mesure. En l'occurrence, le graphique de la figure 2A représente le spectre du signal de mesure Sₘₑₛ pour la case distance 50 m. Les graphiques des figures 2B et 2C représentent le spectre du signal de mesure Sₘₑₛ pour les cases distance 130 m et 290 m, respectivement. Sur chaque graphique, l'axe des abscisses représente une fréquence, en MHz, et l'axe des ordonnées représente l'amplitude normalisée des points échantillonnés du signal de mesure Sₘₑₛ pour la case distance considérée. La fréquence est ici le décalage fréquentiel entre le faisceau laser de mesure Fₘₑₛ et le faisceau laser de retour Fᵣₑₜ. Les graphiques sont issus d'un faisceau laser de mesure Fₘₑₛ présentant un taux de répétition de 150 kHz, et d'une mesure du faisceau laser de retour Fᵣₑₜ sur une durée d'intégration de 10 s. À la distance de 50 m, le spectre du signal Sₘₑₛ présente un pic d'amplitude à environ 10,8 MHz, ce qui correspond à une vitesse radiale du vent d'environ 8,3 m/s. Aux distances de 130 m et 290 m, les spectres présentent un pic d'amplitude à environ 12,5 MHz, ce qui correspond à une vitesse radiale du vent d'environ 9,6 m/s. Il est à remarquer que l'amplitude du pic à la distance de 130 m est nettement supérieure à celles des pics aux distances de 50 m et 290 m. Cela s'explique par le fait que le faisceau laser de mesure est focalisé à une distance relativement proche de 130 m.

La figure 3 représente, sous forme d'un graphique, un exemple de résultats obtenus par un lidar cohérent pulsé selon l'invention. Plus précisément, le graphique de la figure 3 représente la vitesse radiale du vent pour différentes distances comprises entre 50 m et 290 m. L'axe des abscisses représente la distance de mesure, ici une altitude, en mètres, et l'axe des ordonnées représente une vitesse radiale du vent, en mètres par seconde. La vitesse radiale du vent est déterminée simultanément pour chaque distance (ou case distance) à partir du spectre établi pour une ou plusieurs impulsions. Pour chaque impulsion, la vitesse radiale peut être déterminée en considérant la fréquence du pic d'amplitude, ou une fréquence moyenne ou médiane des amplitudes supérieures ou égales à une valeur seuil, par exemple un seuil signal sur bruit.

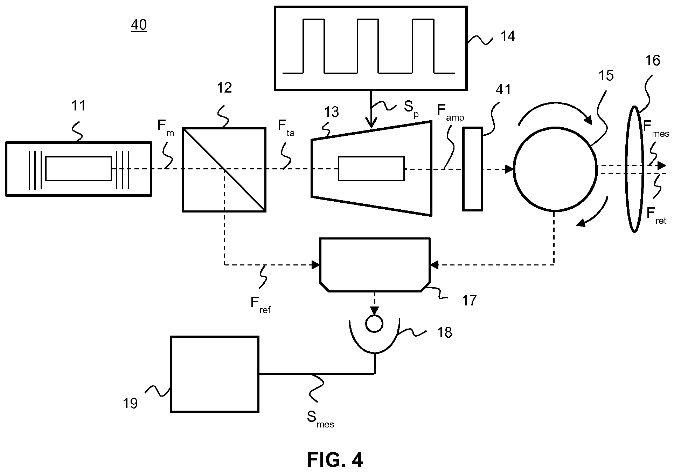

La figure 4 représente un deuxième exemple de réalisation d'un lidar cohérent pulsé selon l'invention. Le lidar 40 comprend, comme le lidar 10 de la figure 1, un laser maître 11, un séparateur de faisceau 12, un amplificateur optique à semi-conducteur 13, un générateur d'impulsions 14, un circulateur 15, un télescope 16, un combineur de faisceaux 17, un capteur optique 18, et une unité de traitement 19. Par rapport au lidar 10 de la figure 1, l'amplificateur optique 13 est représenté comme étant un amplificateur optique fuselé ou en forme d'entonnoir ("tapered optical amplifier"). Néanmoins, tout amplificateur optique à semi-conducteur pourrait être utilisé. Le lidar 40 comprend en outre un élément de décalage en fréquence 41 disposé dans la voie de mesure. En l'occurrence, l'élément de décalage en fréquence 41 est disposé entre la sortie de l'amplificateur optique 13 et la première entrée du circulateur 15. Il permet ainsi de créer un décalage fréquentiel (ou offset fréquentiel) entre le faisceau laser de mesure Fₘₑₛ et le faisceau laser de référence F_{ref}. Ce décalage a pour conséquence de générer un décalage fréquentiel non nul entre le faisceau laser de retour Fᵣₑₜ et le faisceau laser de référence F_{ref} pour une vitesse radiale nulle de la cible. Le traitement du signal de mesure Sₘₑₛ peut alors être facilité. En outre, le décalage fréquentiel permet de connaître le sens de la vitesse radiale du vent. L'élément de décalage en fréquence 41 est de préférence un élément optique et peut être piloté en continu. Il est à noter que cet élément peut être placé ailleurs dans la voie de mesure, voire être placé dans la voie de référence, dans la mesure où il permet dans tous les cas de créer un décalage fréquentiel entre le faisceau laser de retour Fᵣₑₜ et le faisceau laser de référence F_{ref}. Le décalage fréquentiel pourrait aussi être généré au niveau de l'amplificateur optique 13, pendant les phases d'amplification et d'impulsion. Il peut notamment être généré par l'intermédiaire du signal de pompage Sₚ.

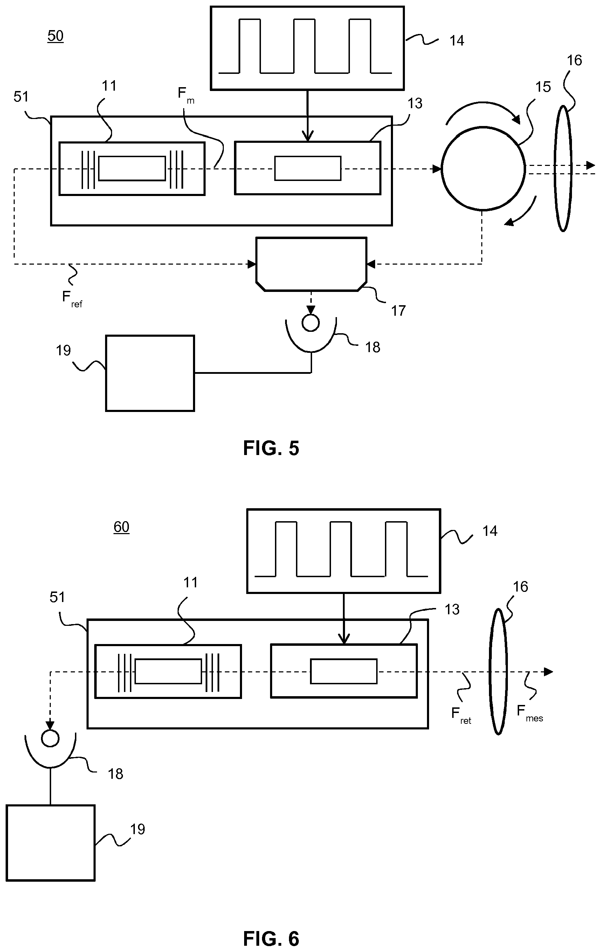

La figure 5 représente un troisième exemple de réalisation d'un lidar cohérent pulsé selon l'invention. Dans cet exemple de réalisation, le lidar 50 ne comprend pas de séparateur de faisceau. Le laser maître 11 génère le faisceau laser maître Fₘ par prélèvement sur une première face du milieu à gain, en direction de l'amplificateur optique 13, et le faisceau laser de référence F_{ref} par prélèvement sur une deuxième face du milieu à gain, opposée à la première, en direction du combineur de faisceaux 17. La deuxième face du milieu à gain comporte un revêtement partiellement réfléchissant à la longueur d'onde du faisceau laser. Dans une telle configuration, où aucun élément optique n'est interposé entre le laser maître 11 et l'amplificateur optique 13, il est particulièrement avantageux d'utiliser un laser à semi-conducteur comme laser maître 11. Le laser maître 11 et l'amplificateur optique 13 peuvent alors être formés sur un même substrat semi-conducteur 51. Ainsi, l'amplificateur de puissance à oscillateur maître (MOPA) peut se présenter sous forme d'un unique composant optoélectronique, afin de diminuer les coûts de fabrication et d'intégration du Lidar.

La figure 6 représente un quatrième exemple de réalisation d'un lidar cohérent pulsé selon l'invention. Dans cet exemple de réalisation, le lidar 60 comprend un laser maître 11 et un amplificateur optique 13 formés sur un unique substrat semi-conducteur 51. Le capteur optique 18 est disposé de manière à recevoir à la fois le faisceau laser de référence F_{ref} et le faisceau laser de retour Fᵣₑₜ via la deuxième face du laser maître 11. La présence du circulateur 15 et du combineur de faisceaux 17 peut être évitée dans la mesure où le laser maître 11 et l'amplificateur optique 13 sont transparents entre deux impulsions optiques. Le faisceau laser de retour Fᵣₑₜ peut ainsi atteindre le capteur optique 18. Cet exemple de réalisation présente l'avantage de comporter un nombre très réduit de composants.

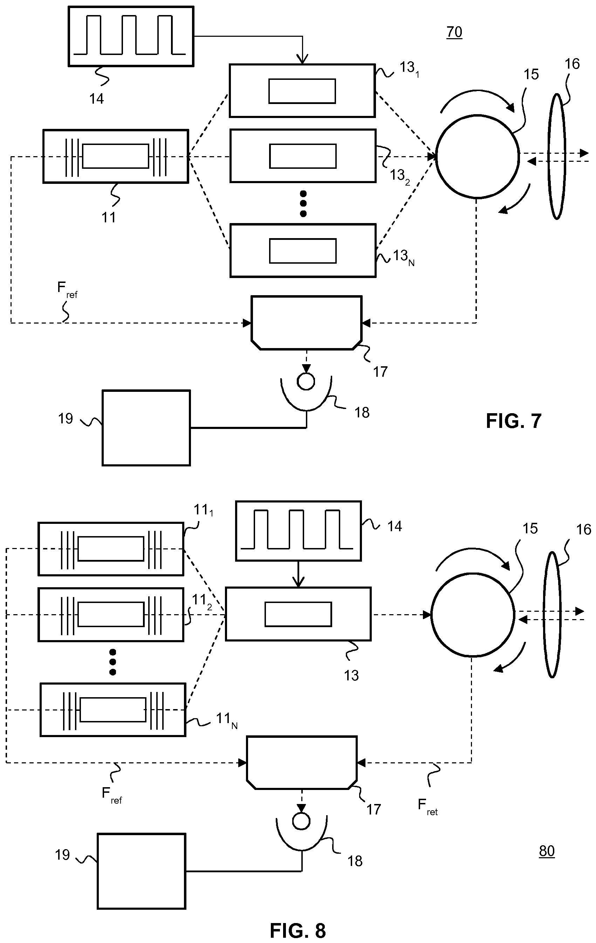

Les figures 7 et 8 représentent deux exemples de réalisation de lidars permettant d'augmenter l'énergie par impulsion du faisceau laser de mesure.

Dans l'exemple de réalisation de la figure 7, le lidar 70 comprend un unique laser maître 11 et une pluralité d'amplificateurs optiques à semi-conducteur 13₁-13_{N}, où N est un entier naturel supérieur ou égal à deux. Le faisceau laser maître Fₘ est divisé en N sous-faisceaux, chacun étant dirigé vers l'un des amplificateurs optiques 13₁-13_{N}. Les sous-faisceaux amplifiés sont dirigés vers la première entrée du circulateur 15 où ils sont mélangés pour former un unique faisceau de mesure Fₘₑₛ. Les amplificateurs optiques 13₁-13_{N} peuvent être formés sur un unique substrat semi-conducteur ou sur plusieurs substrats distincts. Ils peuvent être pompés par un même générateur d'impulsions 14, ou par des générateurs d'impulsions distincts. Selon une variante de réalisation, chaque amplificateur optique 13₁-13_{N} est associé à un laser maître distinct 11₁-11_{N}. Les lasers maîtres peuvent générer des faisceaux lasers ayant sensiblement la même fréquence. Le ou les lasers maîtres 13 peuvent être formés sur le même substrat semi-conducteur que les amplificateurs optiques 13₁-13_{N}.

Dans l'exemple de réalisation de la figure 8, le lidar 80 comprend un unique amplificateur optique 13, mais une pluralité de lasers maîtres 11₁-11_{N} générant des faisceaux lasers maîtres Fₘ à des fréquences distinctes. Les faisceaux lasers Fₘ sont émis sur des périodes de temps distinctes, de manière à ne pas interférer dans le temps. Ils sont dirigés vers l'amplificateur optique 13 où ils sont amplifiés séquentiellement. Ainsi, l'amplificateur optique 13 peut générer un faisceau laser de mesure dont la puissance est répartie sur plusieurs fréquences. Selon une première variante de réalisation, les N lasers maîtres 11₁-11_{N} sont remplacés par un unique laser dont la fréquence est modifiable rapidement par commande. Selon une deuxième variante de réalisation, les N lasers maîtres 11₁-11_{N} sont remplacés par un unique laser couplé à un élément de décalage en fréquence. Le laser peut émettre un faisceau laser à une fréquence unique, que l'élément de décalage en fréquence fait varier séquentiellement. Le ou les lasers maîtres 11 peuvent être formés sur le même substrat semi-conducteur que l'amplificateur optique 13. Selon une troisième variante de réalisation, un laser maître bifréquence est utilisé. Un premier faisceau laser est émis selon une première direction et est utilisé comme faisceau laser maître, et un deuxième faisceau laser est émis selon une deuxième direction, et est utilisé comme faisceau laser de référence. Un décalage fréquentiel entre les deux faisceaux lasers est généralement observé. Ce décalage fréquentiel prédéterminé permet de déterminer le sens de la vitesse radiale du vent.

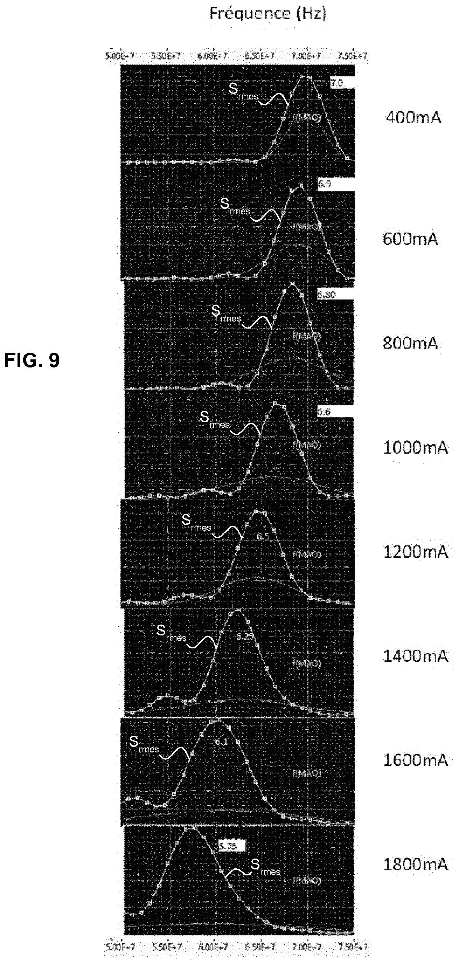

La figure 9 illustre la possibilité d'appliquer un décalage fréquentiel entre le faisceau laser de mesure Fₘₑₛ et le faisceau laser de référence F_{ref} par l'intermédiaire de l'amplificateur à semi-conducteur 13. En particulier, elle représente sur différents graphiques, correspondants à des courants électriques de pompage d'intensités différentes, l'amplitude du spectre d'un signal de mesure Sₘₑₛ en fonction de la fréquence. Le faisceau laser de retour Fᵣₑₜ est ici retourné par une cible évoluant à une vitesse prédéterminée par rapport au lidar. Sur chaque graphique, l'axe des abscisses représente la fréquence du spectre du signal Sₘₑₛ obtenu par transformée de Fourier, et l'axe des ordonnées représente son amplitude. Les graphiques mettent en évidence le fait qu'une augmentation de l'intensité du courant appliqué à l'amplificateur optique à semi-conducteur engendre une modification de la fréquence du faisceau laser de mesure Fₘₑₛ. La fonction de décalage fréquentiel entre le faisceau laser de mesure Fₘₑₛ et le faisceau laser de référence F_{ref} peut ainsi être réalisée par la modification de l'intensité du courant du signal de pompage Sₚ appliqué à l'amplificateur optique à semi-conducteur 13.

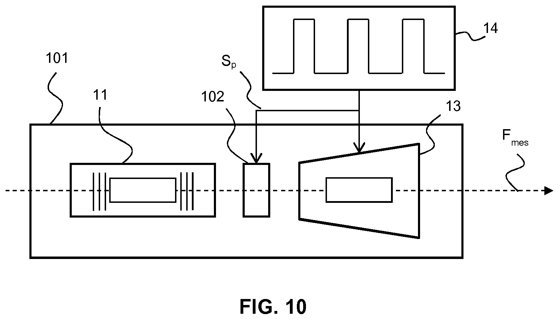

La figure 10 représente un autre exemple de réalisation d'un lidar pulsé selon l'invention. Sur cette figure, seule la partie du lidar assurant les fonctions de formation et d'amplification du faisceau de mesure est représentée. Le lidar comprend un laser maître 11, un amplificateur optique à semi-conducteur 13, et un générateur d'impulsions 14. Il comporte de plus un préamplificateur 102 placé dans la voie de mesure du lidar, en l'occurrence entre le laser maître 11 et l'amplificateur optique 13. Le préamplificateur 102 est de préférence un amplificateur optique à semi-conducteur. Il est alors avantageusement formé sur le même substrat semi-conducteur 101 que le laser maître 11 et l'amplificateur optique 13. Dans l'exemple de la figure 10, le préamplificateur 102 est un amplificateur optique à semi-conducteur à section rectangulaire. Il pourrait cependant être remplacé par un amplificateur optique évasé. Le préamplificateur 102 peut être utilisé en régime impulsionnel ou continu. Dans le régime impulsionnel, le préamplificateur 102 est piloté par un signal de commande de manière à pouvoir prendre deux états optiques : un premier état dit passant, dans lequel il amplifie tout faisceau laser dans une certaine plage de longueurs d'onde, et un deuxième état dit bloquant, dans lequel il atténue l'amplitude du faisceau laser qui le traverse. Dans ce régime, le préamplificateur 102 a pour fonction d'amplifier le faisceau laser maître et d'atténuer, voire de supprimer, les réflexions parasites vers le laser maître 11.

Selon une première variante de réalisation, correspondant à la figure 10, le préamplificateur 102 est piloté, comme l'amplificateur optique 13, par le signal de pompage Sₚ délivré par le générateur d'impulsions 14. Cette variante de réalisation permet de limiter le nombre de composants du lidar, et de faciliter la synchronisation entre le préamplificateur 102 et l'amplificateur optique 13.

Selon une deuxième variante de réalisation, l'amplificateur optique 13 est commandé de manière à amplifier le faisceau laser Fₘ en permanence, et le signal de pompage impulsionnel Sₚ est appliqué uniquement au préamplificateur 102, qui joue aussi le rôle de modulateur d'intensité du faisceau laser de mesure Fₘₑₛ.

Selon une troisième variante de réalisation, seul l'amplificateur optique 13 est piloté par le signal de pompage Sₚ. Le préamplificateur 102 est piloté par un autre signal de commande, noté Sₚ₂, agencé de manière à laisser traverser le faisceau laser maître pendant les phases où il est amplifié par l'amplificateur optique 13. Le signal de commande Sₚ₂ forme alors un signal de pompage pour ce préamplificateur 102. Il peut présenter une forme temporelle et une amplitude sensiblement identiques à celles du signal de pompage Sₚ. Cependant, sa forme temporelle et son amplitude peuvent différer de celles du signal de pompage Sₚ. En particulier, son amplitude peut être inférieure à celle du signal de pompage Sₚ.

Il est à noter qu'un décalage fréquentiel entre le faisceau laser de référence et le faisceau laser de mesure peut aussi être généré au niveau du préamplificateur optique 102, en modifiant par exemple l'intensité du courant du signal de commande Sp₂ qui lui est appliqué.

L'exemple de réalisation de lidar de la figure 10 et ses variantes de réalisation peuvent être combinés avec un ou plusieurs autres exemples de réalisation. En particulier, le lidar peut comporter plusieurs lasers maîtres et/ou plusieurs amplificateurs optiques, comme dans les exemples des figures 7 et 8.

L'atténuation des réflexions parasites dirigées vers le faisceau laser maître peut, de manière alternative, ou en plus de l'ajout d'un préamplificateur optique, être réalisée en prévoyant des surfaces optiques non strictement parallèles entre les différents composants. Par exemple, la face de sortie de l'amplificateur optique 13 peut être non parallèle avec la face de sortie du laser maître 11. À cet effet, le substrat semi-conducteur 101 peut être coupé avec un angle adapté. L'amplificateur optique 13 peut également être disposé de manière à ce que son axe optique forme un angle non nul avec l'axe optique du laser maître, pour atténuer les réflexions parasites.

L'invention concerne également des dispositifs équipés d'un lidar tel que décrit précédemment. En particulier, l'invention concerne une éolienne comprenant des pales, des moyens pour orienter les pales, et un lidar cohérent pulsé selon l'invention. Les moyens pour orienter les pales sont agencés pour orienter les pales en fonction de la caractéristique du faisceau laser de retour. L'invention concerne aussi un bateau à voile comprenant des moyens pour régler une surface de voile, et un lidar cohérent pulsé selon l'invention. Les moyens pour régler la surface de voile sont agencés pour régler la surface de voile en fonction de la caractéristique du faisceau laser de retour déterminée par l'unité de traitement.

Bien sûr, l'invention n'est pas limitée aux exemples qui viennent d'être décrits et de nombreux aménagements peuvent être apportés à ces exemples sans sortir du cadre de l'invention. En particulier, au lieu d'un unique capteur optique, le lidar selon l'invention pourrait comporter un premier capteur optique pour le faisceau laser de retour, et un deuxième capteur optique pour le faisceau laser de référence. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Lidar pulsé comprenant :
▪ un laser maître (11) apte à générer un faisceau laser maître (Fₘ),
▪ un générateur d'impulsions (14) agencé pour générer le signal de pompage (Sₚ),
▪ un amplificateur optique (13) agencé pour amplifier le faisceau laser maître (Fₘ) en fonction du signal de pompage (Sₚ), le faisceau laser maître amplifié (Fₐₘₚ) formant un faisceau laser de mesure (Fₘₑₛ) apte à éclairer un volume de mesure,
▪ un capteur (18) agencé pour recevoir une partie du faisceau laser de mesure rétrodiffusé par le volume de mesure, appelée faisceau laser de retour (Fᵣₑₜ), et générer un signal de mesure (Sₘₑₛ) comprenant une information représentative d'une caractéristique du faisceau laser de retour (Fᵣₑₜ), et
▪ une unité de traitement (19) agencée pour déterminer la caractéristique du faisceau laser de retour (Fᵣₑₜ),
le lidar pulsé (10, 40, 50, 60, 70, 80) étant **caractérisé en ce que** le laser maître (11) est continu ou quasi-continu, l'amplificateur optique est un amplificateur optique à semi-conducteur (13), et **en ce que** le signal de pompage (Sₚ) est déterminé de sorte que l'amplificateur optique à semi-conducteur génère un faisceau laser de mesure (Fₘₑₛ) impulsionnelle.

2. Lidar pulsé selon la revendication 1, dans lequel l'amplificateur optique à semi-conducteur (13) est un amplificateur optique à semi-conducteur à section rectangulaire, ou un amplificateur optique à semi-conducteur fuselé ou évasé.

3. Lidar pulsé selon l'une des revendications 1 et 2, dans lequel le laser maître (11) est un laser à semi-conducteur.

4. Lidar pulsé selon la revendication 3, dans lequel le laser à semi-conducteur (11) et l'amplificateur optique à semi-conducteur (13) sont formés sur un même substrat (51) en matériau semi-conducteur.

5. Lidar pulsé selon l'une des revendications précédentes comprenant, en outre, des moyens pour commander indépendamment le laser maître (11) et l'amplificateur optique à semi-conducteur (13).

6. Lidar pulsé selon l'une des revendications précédentes, dans lequel le générateur d'impulsions (14) est agencé pour générer un courant électrique de pompage.

7. Lidar pulsé selon l'une des revendications 1 à 5, dans lequel le générateur d'impulsions (14) est agencé pour générer un signal optique de pompage.

8. Lidar pulsé selon l'une des revendications précédentes, dans lequel le générateur d'impulsions (14) est agencé de sorte que l'amplificateur optique à semi-conducteur (13) génère un faisceau laser de mesure carré.

9. Lidar pulsé selon l'une des revendications précédentes comprenant, en outre, des moyens (12) pour générer un faisceau laser de référence (F_{ref}) corrélé au faisceau laser maître (Fₘ), et pour diriger le faisceau laser de référence vers le capteur (18), le signal de mesure (Sₘₑₛ) généré par le capteur comprenant une information représentative d'une différence de caractéristique entre le faisceau laser de référence (F_{ref}) et le faisceau laser de retour (Fᵣₑₜ).

10. Lidar pulsé selon la revendication 9, dans lequel les moyens pour générer le faisceau laser de référence comprennent un séparateur de faisceau (12) disposé sur le chemin optique entre le laser maître (11) et l'amplificateur optique à semi-conducteur (13), de sorte que le faisceau laser de référence (F_{ref}) est formé par une partie du rayonnement du faisceau laser maître (Fₘ).

11. Lidar pulsé selon la revendication 9, dans lequel le laser maître (11) comprend un milieu à gain agencé de sorte que le faisceau laser maître est généré sur une première face du milieu à gain, et le faisceau laser de référence (F_{ref}) est généré sur une deuxième face du milieu à gain.

12. Lidar pulsé selon l'une des revendications précédentes, dans lequel des paramètres du laser maître (11) sont ajustés en fonction du signal de mesure (Sₘₑₛ).

13. Lidar pulsé selon l'une des revendications précédentes, comprenant en outre un préamplificateur optique à semi-conducteur (102) placé entre le laser maître (11) et l'amplificateur optique à semi-conducteur (13), le préamplificateur optique (102) recevant le signal de pompage (Sₚ) de manière à amplifier le faisceau laser maître (Fₘ) en fonction du signal de pompage (Sₚ).

14. Lidar pulsé selon l'une des revendications précédentes, dans lequel le générateur d'impulsions (14) est agencé pour pouvoir modifier une propriété du signal de pompage (Sₚ) afin de modifier la fréquence du faisceau laser (Fₐₘₚ) généré par l'amplificateur optique à semi-conducteur (13) et/ou par le préamplificateur optique à semi-conducteur (102).

15. Éolienne comprenant des pales, des moyens pour orienter les pales, et un lidar pulsé (10, 40, 50, 60, 70, 80) selon l'une des revendications précédentes, les moyens pour orienter les pales étant agencés pour orienter les pales en fonction de la caractéristique du faisceau laser de retour (Fᵣₑₜ).

## Patentansprüche

1. Gepulstes Lidar, enthaltend:
- einen Master-Laser (11), der dazu geeignet ist, einen Master-Laserstrahl (Fₘ) zu erzeugen,
- einen Impulsgenerator (14), der dazu angeordnet ist, um das Pumpsignal (S_{P}) zu erzeugen,
- einen optischen Verstärker (13), der dazu angeordnet ist, um den Master-Laserstrahl (Fₘ) in Abhängigkeit von dem Pumpsignal (S_{P}) zu verstärken, wobei der verstärkte Master-Laserstrahl (Fₐₘₚ) einen Messlaserstrahl (Fₘₑₛ) bildet, der dazu geeignet ist, ein Messvolumen auszuleuchten,
- einen Sensor (18), der dazu angeordnet ist, einen Teil des durch das Messvolumen rückgestreuten Messlaserstrahls, Rückstreulaserstrahl (Fᵣₑₜ) genannt, zu empfangen, und ein Messsignal (Sₘₑₛ) zu erzeugen, das eine für eine Charakteristik des Rückstreulaserstrahls (Fᵣₑₜ) repräsentative Information enthält;
- und eine Verarbeitungseinheit (19), die dazu angeordnet ist, um die Charakteristik des Rückstreulaserstrahls (Fᵣₑₜ) zu bestimmen,
wobei das gepulste Lidar (10, 40, 50, 60, 70, 80) **dadurch gekennzeichnet ist, dass**
der Master-Laser (11) kontinuierlich oder quasi-kontinuierlich ist,
der optische Verstärker ein optischer Halbleiterverstärker (13) ist und dass das Pumpsignal (S_{P}) so bestimmt ist, dass der optische Halbleiterverstärker einen Impuls-Messlaserstrahl (Fₘₑₛ) erzeugt.

2. Gepulstes Lidar nach Anspruch 1, wobei der optische Halbleiterverstärker (13) ein optischer Halbleiterverstärker mit rechteckigem Querschnitt oder ein sich verjüngender oder erweiternder optischer Halbleiterverstärker ist.

3. Gepulstes Lidar nach einem der Ansprüche 1 und 2, wobei der Master-Laser (11) ein Halbleiterlaser ist.

4. Gepulstes Lidar nach Anspruch 3, wobei der Halbleiterlaser (11) und der optische Halbleiterverstärker (13) auf einem gleichen Substrat (51) aus Halbleitermaterial ausgebildet sind.

5. Gepulstes Lidar nach einem der vorangehenden Ansprüche, ferner enthaltend Einrichtungen zum unabhängigen Steuern des Master-Lasers (11) und des optischen Halbleiterverstärkers (13).

6. Gepulstes Lidar nach einem der vorangehenden Ansprüche, wobei der Impulsgenerator (14) dazu angeordnet ist, einen elektrischen Pumpstrom zu erzeugen.

7. Gepulstes Lidar nach einem der Ansprüche 1 bis 5, wobei der Impulsgenerator (14) dazu angeordnet ist, ein optisches Pumpsignal zu erzeugen.

8. Gepulstes Lidar nach einem der vorangehenden Ansprüche, wobei der Impulsgenerator (14) so angeordnet ist, dass der optische Halbleiterverstärker (13) einen quadratischen Messlaserstrahl erzeugt.

9. Gepulstes Lidar nach einem der vorangehenden Ansprüche, ferner enthaltend Einrichtungen (12) zum Erzeugen eines Referenzlaserstrahls (F_{ref}), der mit dem Master-Laserstrahl (Fₘ) korreliert ist, und zum Lenken des Referenzlaserstrahls zum Sensor (18), wobei das von dem Sensor erzeugte Messsignal (Sₘₑₛ) eine für eine Charakteristik-Differenz zwischen dem Referenzlaserstrahl (F_{ref}) und dem Rückstreulaserstrahl (Fᵣₑₜ) repräsentative Information enthält.

10. Gepulstes Lidar nach Anspruch 9, wobei die Einrichtungen zum Erzeugen des Referenzlaserstrahls einen Strahlteiler (12) enthalten, der im Strahlengang zwischen dem Master-Laser (11) und dem optischen Halbleiterverstärker (13) angeordnet ist, so dass der Referenzlaserstrahl (F_{ref}) aus einem Teil der Strahlung des Master-Laserstrahls (Fₘ) gebildet wird.

11. Gepulstes Lidar nach Anspruch 9, wobei der Master-Laser (11) ein Verstärkungsmedium enthält, das so angeordnet ist, dass der Master-Laserstrahl auf einer ersten Seite des Verstärkungsmediums erzeugt wird und der Referenzlaserstrahl (F_{ref}) auf einer zweiten Seite des Verstärkungsmediums erzeugt wird.

12. Gepulstes Lidar nach einem der vorangehenden Ansprüche, wobei Parameter des Master-Lasers (11) in Abhängigkeit von dem Messsignal (Sₘₑₛ) abgestimmt werden.

13. Gepulstes Lidar nach einem der vorangehenden Ansprüche, ferner enthaltend einen optischen Halbleitervorverstärker (102), der zwischen dem Master-Laster (11) und dem optischen Halbleiterverstärker (13) positioniert ist, wobei der optische Vorverstärker (102) das Pumpsignal (S_{P}) empfängt, so dass der Master-Laserstrahl (Fₘ) in Abhängigkeit von dem Pumpsignal (Sp) verstärkt wird.

14. Gepulstes Lidar nach einem der vorangehenden Ansprüche, wobei der Impulsgenerator (14) dazu angeordnet ist, um eine Eigenschaft des Pumpsignals (S_{P}) zu ändern, um die Frequenz des Laserstrahls (Fₐₘₚ), der von dem optischen Halbleiterverstärker (13) und/oder von dem optischen Halbleitervorverstärker (102) erzeugt wird, zu ändern.

15. Windkraftanlage, enthaltend Flügel, Einrichtungen zum Ausrichten der Flügel und ein gepulstes Lidar (10, 40, 50, 60, 70, 80) nach einem der vorangehenden Ansprüche, wobei die Einrichtungen zum Ausrichten der Flügel dazu angeordnet sind, um die Flügel in Abhängigkeit von der Charakteristik des Rückstreulaserstrahls (Fᵣₑₜ) auszurichten.

## Claims

1. Pulsed lidar comprising:
▪ a master laser (11) suitable for generating a master laser beam (Fₘ),
▪ a pulse generator (14) arranged in order to generate the pump signal (Sₚ),
▪ an optical amplifier (13) arranged in order to amplify the master laser beam (Fₘ) according to the pump signal (Sₚ), the amplified master laser beam (Fₐₘₚ) forming a measurement laser beam (Fₘₑₛ) suitable for lighting a measurement volume,
▪ a sensor (18) arranged in order to receive a part of the measurement laser beam backscattered by the measurement volume, called return laser beam (Fᵣₑₜ), and generate a measurement signal (Sₘₑₛ) comprising an item of information representative of a feature of the return laser beam (Fᵣₑₜ), and
▪ a processing unit (19) arranged in order to determine the characteristic of the return laser beam (Fᵣₑₜ),
the pulsed lidar (10, 40, 50, 60, 70, 80) being **characterized in that** the master laser (11) is continuous or quasi-continuous,
the optical amplifier is a semiconductor optical amplifier (13),
and **in that** the pump signal (Sₚ) is determined such that the semiconductor optical amplifier generates a pulsed measurement laser beam (Fₘₑₛ).

2. Pulsed lidar according to claim 1, in which the semiconductor optical amplifier (13) is a semiconductor optical amplifier with a rectangular cross-section, or a tapered or flared semiconductor optical amplifier.

3. Pulsed lidar according to one of claims 1 and 2, in which the master laser (11) is a semiconductor laser.

4. Pulsed lidar according to claim 3, in which the semiconductor laser (11) and the semiconductor optical amplifier (13) are formed on one and the same substrate (51) of semiconductor material.

5. Pulsed lidar according to one of the preceding claims, further comprising means for independently controlling the master laser (11) and the semiconductor optical amplifier (13).

6. Pulsed lidar according to one of the preceding claims, in which the pulse generator (14) is arranged in order to generate a pump electrical current.

7. Pulsed lidar according to one of claims 1 to 5, in which the pulse generator (14) is arranged in order to generate a pump optical signal.

8. Pulsed lidar according to one of the preceding claims, in which the pulse generator (14) is arranged such that the semiconductor optical amplifier (13) generates a square laser measurement beam.

9. Pulsed lidar according to one of the preceding claims, further comprising means (12) for generating a reference laser beam (F_{ref}) correlated with the master laser beam (Fₘ), and for directing the reference laser beam towards the sensor (18), the measurement signal (Sₘₑₛ) generated by the sensor comprising an item of information representative of a difference in feature between the reference laser beam (F_{ref}) and the return laser beam (Fᵣₑₜ).

10. Pulsed lidar according to claim 9, in which the means for generating the reference laser beam comprise a beam separator (12) placed on the optical path between the master laser (11) and the semiconductor optical amplifier (13), such that the reference laser beam (F_{ref}) is formed by a part of the radiation from the master laser beam (Fₘ).

11. Pulsed lidar according to claim 9, in which the master laser (11) comprises a gain medium arranged such that the master laser beam is generated on a first face of the gain medium and the reference laser beam (F_{ref}) is generated on a second face of the gain medium.

12. Pulsed lidar according to one of the preceding claims, in which parameters of the master laser (11) are adjusted according to the measurement signal (Sₘₑₛ).

13. Pulsed lidar according to one of the preceding claims, further comprising a semiconductor optical preamplifier (102) placed between the master laser (11) and the semiconductor optical amplifier (13), the optical preamplifier (102) receiving the pump signal (Sₚ) so as to amplify the master laser beam (Fₘ) according to the pump signal (Sₚ).

14. Pulsed lidar according to one of the preceding claims, in which the pulse generator (14) is arranged in order to be able to change a property of the pump signal (Sₚ) so as to change the frequency of the laser beam (Fₐₘₚ) generated by the semiconductor optical amplifier (13) and/or by the semiconductor optical preamplifier (102).

15. Wind turbine comprising blades, means for orienting the blades, and a pulsed lidar (10, 40, 50, 60, 70, 80) according to one of the preceding claims, the means for orienting the blades being arranged in order to orient the blades according to the feature of the return laser beam (Fᵣₑₜ).
